# EUROPEAN PATENT APPLICATION

(11) **EP 2 687 983 A1**
(43) Date of publication of application: **22.01.2014**
(21) Application number: 13175488.9
(22) Date of filing: 08.07.2013
(51) Int. Cl.: G06F 9/48

(54) **Hierarchical system for managing a plurality of virtual machines, method and computer program**

(30) Priority: 16.07.2012 EP 12176591
(71) Applicant: NTT DoCoMo, Inc., Chiyoda-ku Tokyo 100-6150 (JP)
(72) Inventor: Khan, Ashiq, 80687 München (DE); Kozu, Kazuyuki, 80687 München (DE); Vaishnavi, Ishan, 80687 München (DE)
(74) Representative: Zinkler, Franz

(57) **Abstract**

A hierarchical system for managing a plurality of virtual machines, comprises: a first local migration anchor point (110) connectable to a first group of at least two physical machines (100a, 100b), wherein the first migration anchor point is configured for storing a data set (110a, 110b) comprising a virtual machine identification of a first virtual machine located on one of the first group of at least two physical machines, and a physical machine identification of the one physical machine; a second local migration anchor point (130) connectable to a second group of at least two physical machines (120a, 120b), wherein the second local migration anchor point is configured for storing a data set (130a, 130b) comprising a virtual machine identification of a second virtual machine located on one physical machine of the second group of at least two physical machines, and a physical machine identification of the one physical machine; a global migration anchor point (140) connected to the first local migration anchor point and the second local migration anchor point, wherein the global migration anchor point is configured for storing, in a first data record (140a), a first service identification on an application performed by the first virtual machine, an associated identification of the first virtual machine, and an identification of the first local migration anchor point, and for storing, in a second data record (140b), a service identification of an application performed by the second virtual machine, an associated identification of the second virtual machine, and an identification of the second local migration anchor point; and a virtual machine location register (150) configured for storing a first data entry (150a) for the first virtual machine, the first data entry comprising the first service identification, the identification of the first virtual machine and the identification of the first local migration anchor point, and comprising a second data entry (150b) comprising the second service identification, the identification of the second virtual machine and the identification of the second local migration anchor point to which the physical machine, in which the second virtual machine is located, is connectable.

## Description

The present invention relates to computer systems and, particularly, to the management of virtual machines located on different physical machines.

Virtualization, virtual machines, migration management and clouds computing are procedures which become more and more important. The management of virtual machines is particularly useful and applicable for cloud services, for a network-based migration management, for a disaster management or for the purpose of energy saving.

Basically, virtual machine computing makes it possible to perform certain services on different machines, i.e., physical machines. Physical machines are computers which are located at a certain location. Virtual machines are implemented to perform a certain service, but virtual machines are designed such that the virtual machines can migrate from one physical machine to a different physical machine. Particularly, this means that the computational resources provided by a certain physical machine to implement a virtual machine can be used by the virtual machine at a first time period and, subsequent to migration from one physical machine to a different physical machine, the computational resources provided by the earlier physical machine are free for other services and the virtual machine uses computational resources of a new physical machine for performing a new service or for continuing the currently running process.

The virtual machine migration from one physical machine to another physical machine is a problem from a session continuity point of view and is also a problem with respect to the update of the whole network on the location of the virtual machine. Particularly, when there exist several separately controlled groups of physical machines which are also called "clouds", the migration of a virtual machine from one cloud to a different cloud is also a challenging task.

There exists the layer 2 virtual private networks (L2VPN) working group, which is responsible for defining and specifying a limited number of solutions for supporting provider-provisioned layer-2 virtual private networks. For an intra-cloud migration management, L2VPN is the mostly used solution. For L2VPN, a layer 2 switch remembers through which port a virtual machine is reachable. When a virtual machine moves from one physical machine to another one, the port changes for the virtual machine. However, present L2 switches have a learning capability and check MAC addresses of incoming packets through a port. As the virtual machine MAC address does not change up to migration, the L2 switch can identify the virtual machine by snooping into the incoming packet from the virtual machine through a different port. Particularly, the L2 switch identifies the virtual machine by its MAC address and through which port it is reachable. However, considering the huge scale deployment of present clouds, L2VPN does not scale at all from a scalability point of view, as L2VPNs are manually configured and a VLAN tag is only 12 bytes long and, therefore, it is only possible to create 4096 VLANs. Additionally, this solution is also not applicable to an inter-cloud migration scenario.

Another solution, which is mainly seen in the research area is an Open Flow based solution. For an intra-cloud scenario, this solution is the same as L2VPN. Particularly, it is the Open Flow controller that re-routes the flow to a virtual machine up to migration. The virtual machine migration can be monitored by the Open Flow controller. After the migration, the Open Flow controller re-writes the forwarding table of the Open Flow switch so that the switch can forward a packet through the appropriate port. However, this solution also not applicable to inter-cloud migration scenarios.

US Patent 8,042,108 B1 discloses a virtual machine migration between servers. A virtual machine is migrated between two servers. At the first server, a volume, on which all the files relating to the virtual machine are stored is dismounted. At the second server, the volume, in which all the files relating to the virtual machine are stored is mounted so that the second servers can host the virtual machine. In this way, the virtual machine can be migrated without having to copy all the files from the first server to the' second server. The files relating to the virtual machine are stored on a storage-area network (SAN). However, using this solution to support inter-cloud migration is unrealistic to imagine that the SAN of one cloud can be accessed by another cloud. Even if that is implemented, changing route to the new location of a virtual machine has to be addressed.

US 2011/0161491 discloses that, in cooperation between each data center and a WAN, virtual machine migration is carried out without interruption in processing so as to enable effective power-saving implementation, load distribution, or fault countermeasure processing. Each node located at a boundary point between the WAN and another network is provided with a network address translation (NAT) function that can be set dynamically to avoid address duplication due to virtual machine migration. Alternatively, each node included in the WAN is provided with a network virtualization function; and there are implemented a virtual network connected to a data center for including a virtual machine before migration, and a virtual network connected to a data center for including the virtual machine after migration, thereby allowing coexistent provision of identical addresses.; Thus, the need for changing network routing information at the time of virtual machine migration can be eliminated, and a setting change for migration accomplished quickly.

It is an objected of the present invention to provide an improved hierarchical concept for managing a plurality of virtual machines.

This object is achieved by a hierarchical system for managing a plurality of virtual machines in accordance with claim 1, a method of managing a plurality of virtual machines in accordance with claim 15 or a computer program in accordance with claim 16.

The present invention relates to a hierarchical system for managing a plurality of virtual machines, comprising a first local migration or mobility anchor point connectable to a first group of at least two physical machines, wherein the first migration anchor point is configured for storing a data set comprising a virtual machine identification of a first virtual machine located on one of the first group of at least two physical machines, and a physical machine identification of the one physical machine, a second local migration or mobility anchor point connectable to a second group of at least two physical machines, wherein the second local migration anchor point is configured for storing a data set comprising a virtual machine identification of a second virtual machine located on one physical machine of the second group of at least two physical machines, and a physical machine identification of the one physical machine, a global migration or mobility anchor point connected to the first local migration anchor point and the second local migration anchor point, wherein the global migration anchor point is configured for storing, in a first data record, a first service identification on an application performed by the first virtual machine, an associated identification of the first virtual machine, and an identification of the first local migration anchor point, and for storing, in a second data record, a service identification of an application performed by the second virtual machine, an associated identification of the second virtual machine, and an identification of the second local migration anchor point, and a virtual machine location register configured for storing a first data entry for the first virtual machine, the first data entry comprising the first service identification, the identification of the first virtual machine and the identification of the first local migration anchor point, and comprising a second data entry comprising the second service identification, the identification of the second virtual machine and the identification of the second local migration anchor point to which the physical machine, in which the second virtual machine is located, is connectable.

Further aspects of the present invention are related to a corresponding method and a corresponding computer program.

The present invention addresses the problem for performing virtual machine migration from one physical machine to another physical machine from the session continuity point of view and also from the problem of updating the whole network on the location of the virtual machine. Particularly, the present invention is also useful for the situation, when a virtual machine migrates from one group of physical machines or clouds to another group of physical machines or clouds.

Embodiments of the present invention relate to a 3-tier architecture for migration (migration) management. One cloud is managed by one local migration anchor point (LP), a plurality of LPs are managed by a global migration anchor point (GP). Furthermore, there is a virtual machine location registrar (VMLR), which maintains a database showing the location of a virtual machine, i.e., through which LP and GP the virtual machine is reachable. Particularly, the virtual machine location register or registrar comprises data entries in the database. During or after migration, the location information of a virtual machine is updated through signaling to the relevant LPs, GP and VMLR and, therefore, the location information of a virtual machine is always available. Preferred embodiments relate to a precise data path setup and to a precise modification procedure.

Embodiments of the present invention have the advantage that the system is technology independent. It does not assume a specific routing/forwarding method as, for example, used in Open Flow. Furthermore, the present invention is, with respect to certain embodiments, easy to manage, since only a few (such as less than 20) global migration anchor points (GPs) are necessary or even single GP is necessary and needs to be updated. This system can support an intra-cloud and inter-cloud migration (migration) management simultaneously and, therefore, two different migration (migration) management schemes are not necessarily required.

Furthermore, embodiments are cellular network friendly, as the architecture and migration (migration management) procedure resembles cellular networking techniques, although at a high-level. Therefore, experiences used in implementing a cellular network technique can also be used and applied for implementing the hierarchical system for managing a plurality of virtual machines. The present invention allows a network reconfiguration before, during or after natural disasters. Virtual machines can be migrated to a safer location, which will ensure service continuity and, therefore, customer satisfaction. An network reconfiguration such as migrating virtual machines to a certain location and shutting down the rest, i.e., the non-necessary resources will be easily possible, for example during the night. This will also reduce energy consumption and will realize green networking. For the purpose of the subsequent description, a group of physical machines is also termed to be a cloud, and a cloud can also be seen as a plurality of physical machines organized to be portrayed as a single administrative entity that provides virtual machine based application services such as web-servers, video servers, etc.

In contrast to the present invention, the concept in US 2011/0161491 is a centralized scheme. The present invention is a distributed scheme. In embodiments, a virtual machine registers itself to relevant entities e.g. Local Mobility Anchor Points, Global Mobility Anchor Points. No central entity updates/changes routes to new location of the VM.

The central network management system of the inventive scheme does not manage the migration itself, neither changes routes to new location of the VM. It merely tells a cloud/VM to migrate to another cloud where resources are available. The rest occurs autonomously in embodiments of the invention.

In contrast to the above prior art reference, embodiments do not virtualize each node in a WAN. That would be very expensive. In embodiments, only a limited number of nodes need to support encapsulation i.e. the anchor points. That's enough.

Furthermore, it is to be mentioned that disseminating LAN/Subnet routing information into WAN is a very unlikely and not scalable scenario. The question remains how far this info has to be disseminated. There are hundreds of routers/switches in a WAN. Therefore, only a few anchor points are defined in embodiments of the invention.

Embodiments do not do buffering. For real time applications like voice calls, buffering will not bring any advantages

Furthermore, in the prior art reference, the VM migration is centrally controlled by a manager, which lacks scalability. It will not scale when the number of VM migration becomes high e.g. 1000s. Contrary thereto, embodiments have a VM migration that is selfmanaged and distributed.

In the prior art, a changeover instruction informs a node about the change of location of the VM. This is again a centralized method. Depending on the number of migrations, the same number of nodes has to be informed. This once again leads to a scalability problem. Furthermore, affected nodes are equal to the numbers of source and destination clouds. This constitutes a lack of scalability. As the number of clouds increase, so do the number of affected nodes. In embodiments of the invention, however, a number of Local Mobility Anchor points being equal to the number of clouds plus one Global Mobility Anchor point is preferred. That is half the number required by the above prior art reference.

In embodiments, the previous location of the VM is informed about the new location of the VM, so that packets can be forwarded to the new location. Furthermore, the encapsulation scheme is preferred so that packets going to the old location can be forwarded to the new location. Encapsulation is not performing a network address translation (NAT).

Overall, for each session, the number of network address translation in the above prior art reference is 2 (one on the client side and one on the VM side). In embodiments of the invention, however, network address translation is only performed in the Global Mobility Anchor Point. The destination address (i.e. VM address) is not replaced. Instead the address is encapsulated using the Local Mobility Anchor Point etc. until it reaches the VM.

Subsequently, preferred embodiments of the present invention are discussed with respect to the accompanying drawings, in which:
- Fig. 1: is a block diagram of an embodiment of a hierarchical system for managing a plurality of virtual machines;
- Fig. 2a: is a flowchart of procedures performed by a global migration anchor point;
- Fig. 2b: is a flowchart of procedures performed by a local migration anchor point;
- Fig. 3a: is a flowchart for illustrating processes performed for an intra-migration;
- Fig. 3b: is a flowchart for procedures performed in an inter-cloud migration;
- Fig. 3c: illustrates procedures performed during a paging process;
- Fig. 3d: illustrates processes performed when a plurality of global migration anchor points exists;
- Fig. 4: illustrates a target configuration for a use scenario of the invention;
- Fig. 5: illustrates an overview of the inventive system/method compared to a cellular networks migration management architecture;
- Fig. 6: illustrates a detailed initialization procedure;
- Fig. 7: illustrates a detailed service discovery and session establishment procedure;
- Fig. 8: illustrates a data path subsequent to a session establishment;
- Fig. 9a: illustrates a migration support/handover procedure in a starting mode;
- Fig. 9b: illustrates a migration support/handover procedure for an intra-cloud migration;
- Fig. 9c: illustrates a migration support/handover procedure for an inter-cloud migration;
- Fig. 9d: illustrates a final state of the inter-cloud migration;
- Fig. 10: illustrates a flowchart for a location update procedure;
- Fig. 11: illustrates a high level diagram with a network configuration platform; and
- Fig. 12: illustrates a location registration/update procedure.

Before embodiments are discussed in more detail, some basics relating to virtual machine technology are discussed. One procedure is a virtual machine instantiation. Here, a login to a hypervisor is performed and, subsequently, an issue command is given. This issue command means that a virtual machine is to be instantiated, and the virtual machine is given a certain identification (ID). Furthermore, a certain memory is defined such as 128 Mbps. Furthermore, a CPU is defined having, for example, one or more cores, and an IP address is given such as w.x.y.z. This data is necessary in this example to instantiate, i.e., implement a virtual machine on a certain hardware or physical machine. A particular implementation of a virtual machine is outside the scope of this invention. Some example implementations are XEN, VMWare, KVM etc.

For a virtual machine migration, this implemented virtual machine has to be migrated from a first physical server or physical machine A to a second physical server or physical machine B. The virtual machine which has been instantiated before on physical server A performs certain sessions using the resources defined for the virtual machine. Typically, the virtual machine migration is implemented by instantiating the same virtual machine on the second physical server B and by initiating a memory copy from the physical server A to the physical server B.

Then, the virtual machine is actually moved out from the physical server A and placed into the physical server B and the sessions are then performed on the physical server B and the resources on physical server A which have been used by the virtual machine are now free. However, this is only possible within one administrative domain such as in one cloud.

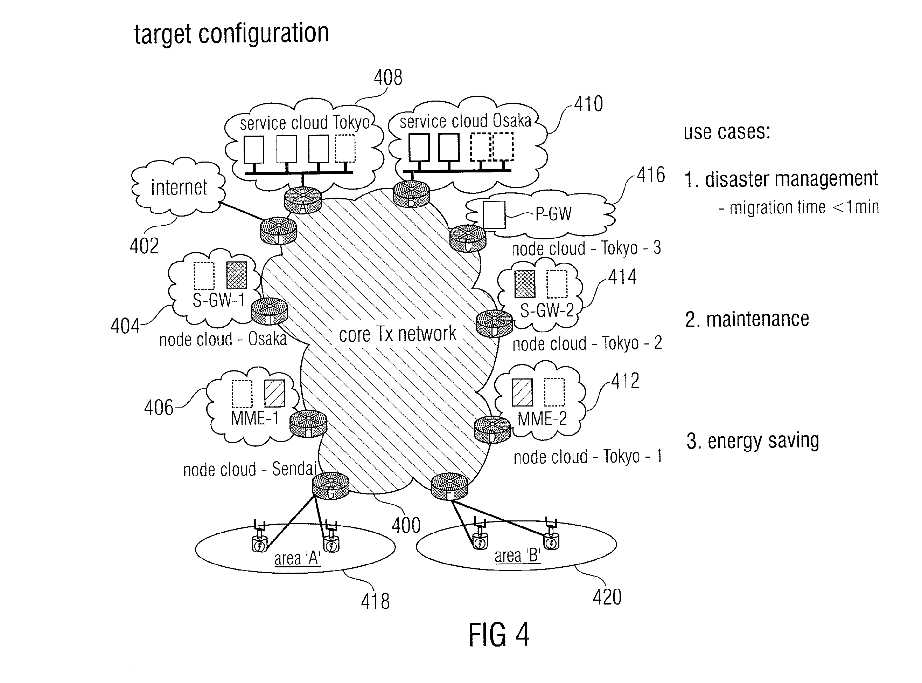

Subsequently, Fig. 4 is discussed. Fig. 4 illustrates a core transmission network 400 being, for example, the Japanese core transmission network. Furthermore, the Internet is illustrated as one cloud 402 and individual node clouds 404, 406 for the Japanese cities Osaka and Sendai are illustrated as well.

Furthermore, two service clouds for the Japanese capital Tokyo are illustrated at 408 and 410 and three node clouds for the Japanese capital are illustrated at 412, 414, 416. Furthermore, two areas such as area A and area B are illustrated at 418 and 420. Basically, the inventive concept relies on the fact that if fixed telephone can become mobile, then can the fixed servers. Use cases for such procedures are disaster management. To this end, for example, applications placed on the service cloud Tokyo 408 can be migrated to the service cloud Osaka 410. Other use cases are maintenances. To this end, for example, one application could be migrated from node cloud Tokyo-1 indicated at 412 to node cloud Tokyo-3. Other procedures could be, for example, to move an application from node cloud Tokyo-2 414 to 416. A further use case would be energy saving. Particularly for the purpose of disaster management, a migration time smaller than one minute would be appreciated.

In a geographically dispersed cloud system, an intra-cloud (micro-migration) and an intercloud (macro-migration) migration management would be useful. Challenges are that due to the proliferation of virtualization technology, virtual machines are not tied to any physical location anymore. To make them fully mobile, these challenges particularly relate to a seamless session migration, to a discovery of virtual machines after migration and to the route optimization, i.e., the communication route through the core transmission network to the certain cloud and then to the certain virtual machine/physical machine (on which the virtual machine is running).

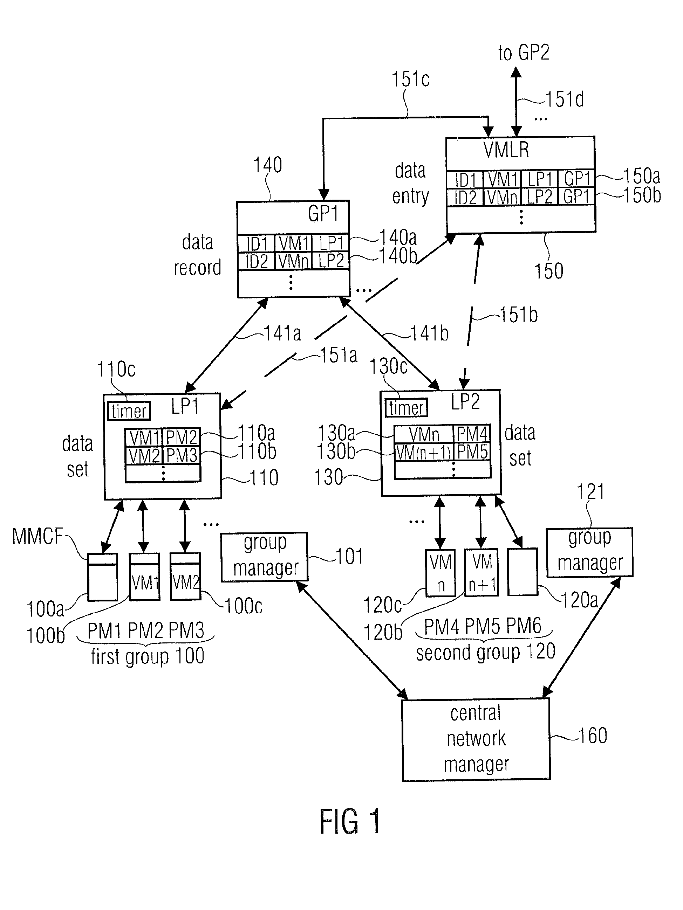

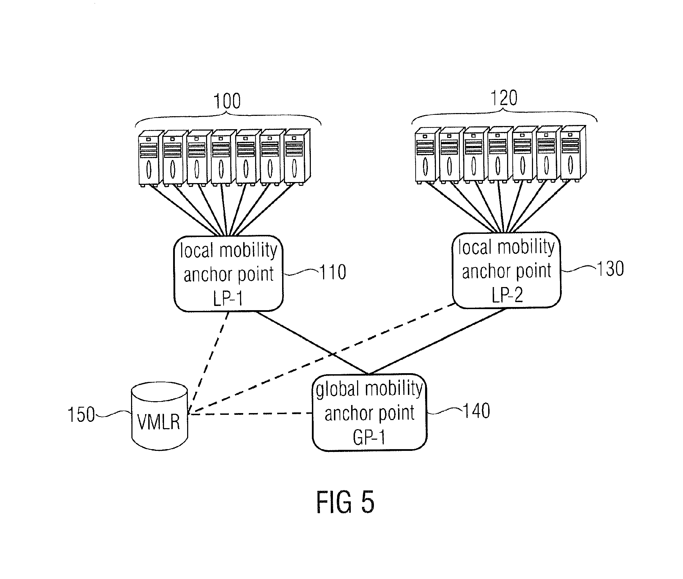

The basic concept of the present invention is particularly illustrated in Fig. 5.. The resulting structure, in accordance with the inventive concept is illustrated to the right hand side of Fig. 5, where a first group of physical machines 100 is connected to a local migration anchor point 110 and a second group of physical machines 120 is connected to a second migration anchor point 130. Furthermore, both local migration anchor points 110, 130 are connected to the global migration anchor point 140 on the one hand side and, additionally, are communicatively connected to the virtual machine location register 150. Furthermore, the global migration anchor point 140 additionally has a communication connection to the virtual machine location register (VMLR) 150. Subsequently, Fig. 1 is discussed in more detail. Fig. 1 illustrates a hierarchical system for managing a plurality of virtual machines.

The system comprises the first local migration anchor point 110 which is connectable to a first group of at least two individual physical machines 100a, 100b, 100c. The local migration anchor point 110 is configured for storing individual data sets 110a, 110b, wherein each data set comprises a virtual machine identification of a first virtual machine such as VM1 located on one of the first group of at least two physical machines such as located on physical machine 100b or PM2, and a physical machine identification of the one physical machine, i.e., PM2. In parallel, the second local migration anchor point 130 connectable to the second group of at least two physical machines such as 120a, 120b, 120c additionally is configured for storing corresponding data sets 130a, 130b. Each data set 130a, 130b comprises again a virtual machine identification of a virtual machine located on one physical machine of the second group of at least two physical machines and a corresponding physical machine identification of this physical machine. Particularly, when the virtual machine n is located on physical machine 120c having the physical machine identification PM4, then a data set comprises the VM ID VMn in association with the physical machine ID PM4, on which the virtual machine n is located. Exemplarily, a further virtual machine VM(n+1) is located on physical machine 120b having the physical machine ID PM5 and therefore the second data set 130b has, in association with each other, the ID of the virtual machine VM(n + 1) and the ID of the associated physical machine PM5. Naturally, a physical machine can additionally host more virtual machines, and in this case each virtual machine would have a certain data set where these data sets would have the same physical machine ID for each virtual machine which is located on this specific physical machine.

Furthermore, the global migration anchor point 140, which is indicated at GP1 is connected to the first local migration anchor point LP1 via a first connection line 141a and is connected to the second local migration anchor point LP2 via a further connection line 141 b.

The global migration anchor point GP1 is configured for storing, in a certain data record, a first service identification on application performed by a first virtual machine, which is indicated as ID 1 in data record 140a or which is indicated at ID2 in the second data record 140b. Furthermore, the data record 140a comprises an associated identification of the first virtual machine VM1 and an identification of the first local migration anchor point LP1. Furthermore, the second data record 140b has a service identification ID2 of an application performed by the second virtual machine such as VMn in physical machine 120c having the physical ID PM4. However, no physical machine IDs are required in the data records of the global migration anchor point, since the present invention has the hierarchical 2-tier structure.

The virtual machine location register can be connected to the local migration anchor points as indicated by the hatched lines 151a and 151 b, but this is not necessarily the case. However, the VMLR 150 is connected to the global migration anchor points via a connection line 151c and is connected to any other global migration anchor points such as GP2 via connection line 151 d.

The VMLR comprises a data entry for each virtual machine running in any of the physical machines associated with the global migration anchor points connected to the VMLR. Hence, a single VMLR is used for a whole network having a plurality of different clouds and the VMLR has a data entry for each and every virtual machine running in any of these clouds. Furthermore, the VMLR has an identification of the service such as ID1, ID2, has an identification of the virtual machine, has an identification of the local migration anchor points to which the physical machine having the virtual machine is connected and additionally the VMLR has for each ID the corresponding global migration anchor point. Since both virtual machines VM1, VMn are connected to the GP1, both data entries have the same GP1 entry. When only a single global migration anchor point is used then the GP entry in the VMLR is not necessary.

Furthermore, the hierarchical system additionally comprises a central network management system 160 and a group manager 101 for the first group 100 and a separate group manager 121 for the second group of physical machines.

Furthermore, as discussed later on, each local migration anchor point preferably comprises a timer indicating an expiration time period indicated at 110c for LP 1 and indicated at 130c for LP2. Particularly, each of the devices illustrated in Fig. 1 is, as the need requires, configured for transmitting certain messages to other communication partners and/or for receiving and interpreting and manipulating messages received from the other communication partners.

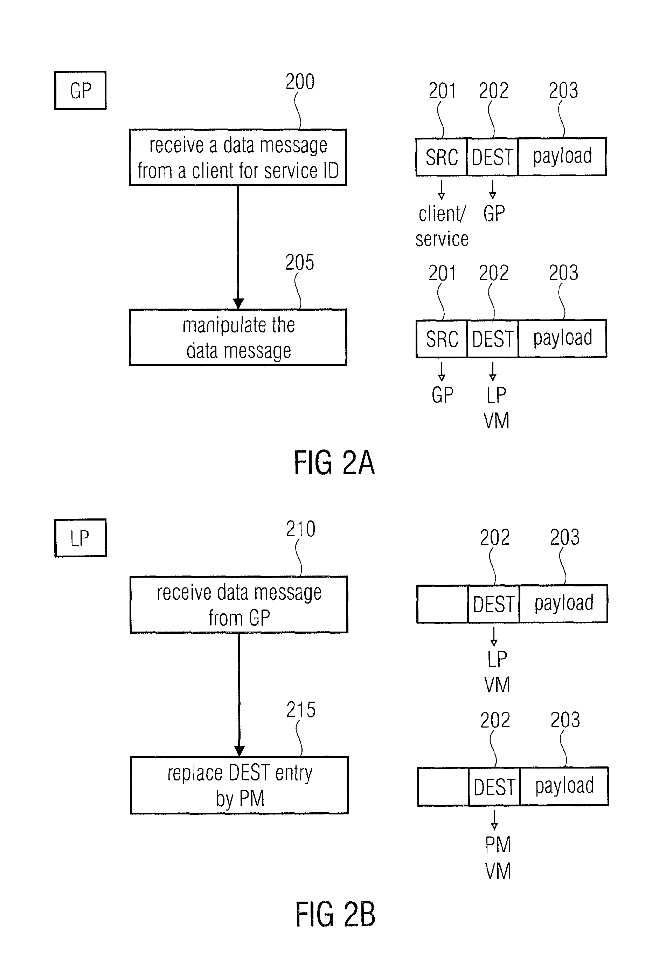

Furthermore, as illustrated in Fig. 2a, the global migration anchor point 140 is configured for receiving a data message indicated at 200 from a client for a service identified by the service identification (ID), wherein the data message indicated to the right of block 200 has a source entry 201, a destination entry 202 and a payload entry 203. The source entry indicates the client who intends to be serviced by the certain service and the destination entry identifies the global migration anchor point receiving this data message. Then, as outlined in step 205, the global migration anchor point is configured for manipulating the data message received so that the source entry 201 identifies the global migration anchor point and the destination entry identifies the local migration anchor point LP on the one hand and the virtual machine on the other hand, and the global migration anchor point is in the position to do that due to the stored data record comprising the specific service identification.

As illustrated in Fig. 2b, the local migration anchor point is configured for receiving a data message from a global migration anchor point as illustrated in 210. Particularly, the local migration anchor point is then configured for replacing, in the data message, the local migration anchor point identification by the physical machine identification based on the stored data set comprising the virtual machine identification indicated by the data message as indicated for the destination fields 202. Specifically, this replacement of the destination entry by the specific physical machine is also illustrated in block 215.

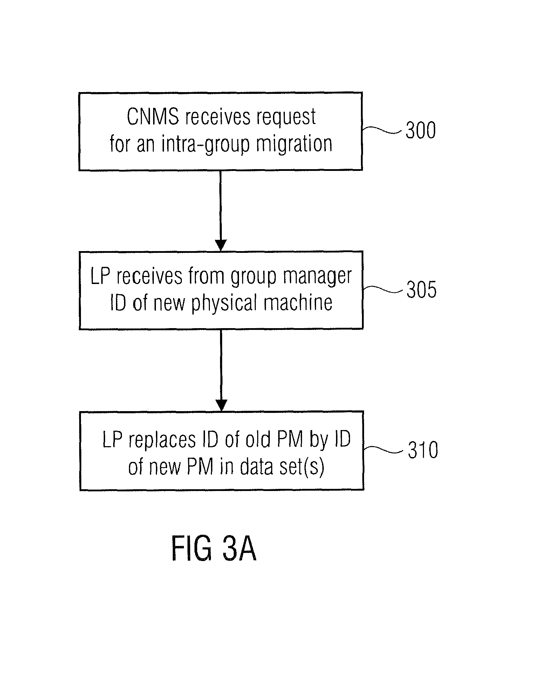

Subsequently, Fig. 3a is discussed. Fig. 3a illustrates one functionality of the central network manager (CNMS) 160 illustrated in Fig. 1. Particularly, the CNMS receives a request or decision for an intra-group migration as indicated at 300. The local migration anchor point is configured to receive, from its corresponding group manager such as 101 in Fig. 1, the ID of the new physical machine as indicated in 305. Then, the local migration anchor point replaces in the data set the identification of the first physical machine by the identification of the second (new) physical machine. This is indicated at 310. Hence, a migration within a group or a cloud only has an influence on the data sets stored in the local migration anchor point but does no have any influence on the data records stored in the global migration anchor points. No changes in the VMLR are necessary, as well, since the VMLR does not store any physical machine identifications but only stores LP/GP and service-ID data.

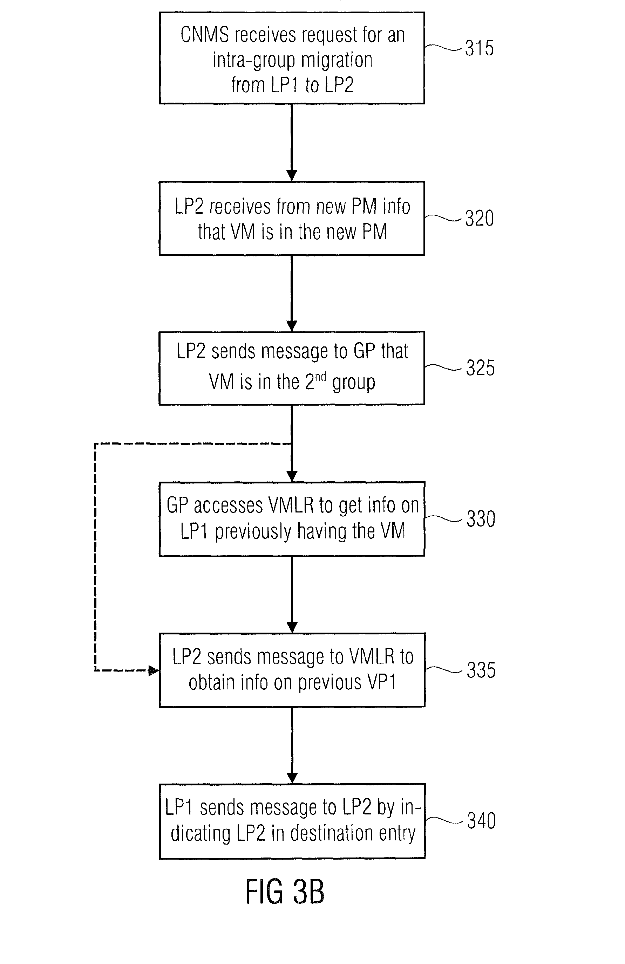

Fig. 3b illustrates the situation where the central network manager 160 decides on an inter-group migration, i.e. from the migration of a virtual machine from a first physical machine associated to a first local migration anchor point to a second physical machine associated to a different local migration anchor point. The CNMS 160 of Fig. 1 therefore receives a request or a decision for an inter-group migration as indicated in 315. Then, the second local migration anchor point, which is the destination of the migration, is configured to receive, from the first physical machine of the second group of physical machines, an information that the first virtual machine is located in the first physical machine of the second group of physical machines, i.e. the new physical machine as illustrated in 320. Additionally, the second local migration anchor point is configured to send a message to the global migration anchor point as illustrated in 325. This message indicates that the first virtual machine is now located in the second group of physical machines, and as illustrated at 330, the global migration anchor point is configured to access the virtual machine location register VMLR 150 for receiving in information on the previous local migration anchor point 330. Alternatively or additionally, the second local migration anchor point is configured to send a message to the VMLR to obtain information on the previous local migration anchor point as indicated at 335. Basically, one of the procedures 330 and 335 are sufficient, but depending on the implementation both procedures can be performed cumulatively.

In step 340, the first local migration anchor point is configured for sending a data message to be directed to the first virtual machine to the second local migration anchor point by indicating the second local migration anchor point in the destination entry of this data message so that the data message is routed to the correct physical machine, in which the required virtual machine is residing. In addition, the first virtual machine can inform the 2nd local mobility anchor point about the 1st local mobility anchor point after the migration.

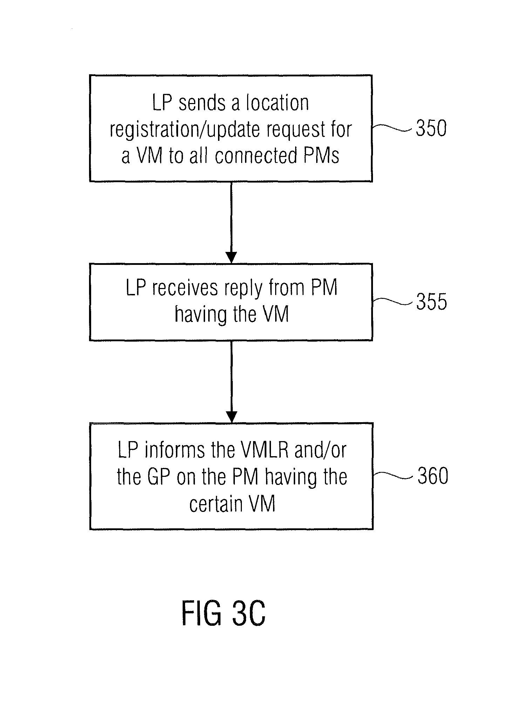

Subsequently, Fig. 3c is discussed, which indicates a certain paging functionality. In step 350 the local migration anchor point sends a location registration update request identifying a certain virtual machine to all physical machines in the group of physical machines which are connected to this local migration anchor point. The local migration anchor point receives, in step 355, a reply from the physical machine having the certain virtual machine located. In step 360 the local migration anchor point is configured to inform the virtual machine location register or additionally the global migration anchor point on the physical machine, on which the certain virtual machine resides. Furthermore, the VM can directly reply to an LP, so that the whole traffic is kept transparent to PM.

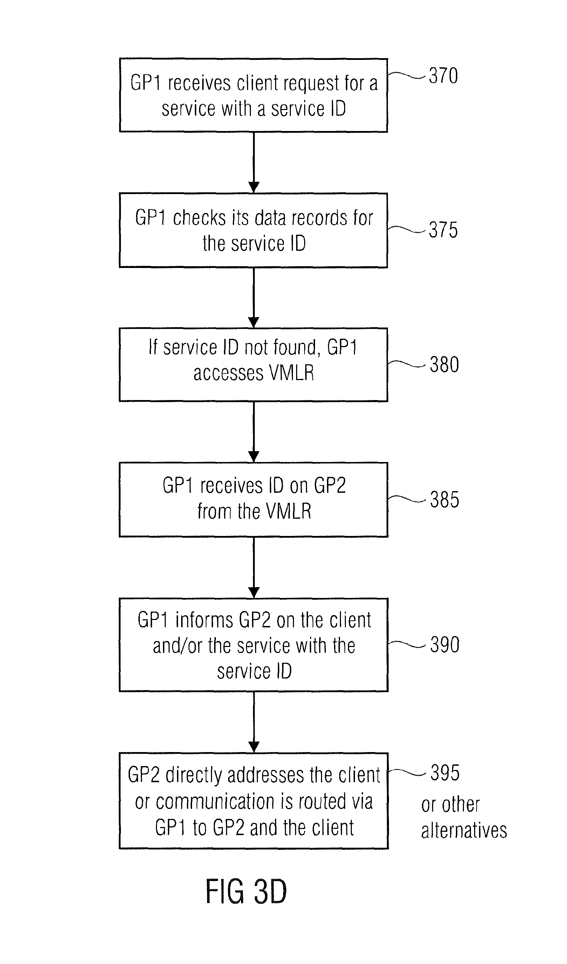

Fig. 3d illustrates a procedure which is preferably performed in a system which has two global migration anchor points such as GP1 and GP2. In step 370 GP1 receives a client request for a service with a service ID. Then, in step 375 GP1 checks its data records for the service ID. If the service ID included in the message is not found, GP1 accesses the VMLR as illustrated in step 380. Then, in step 385 GP1 receives the ID from GP2 from the VMLR. Then, in step 390 GP1 informs GP2 on the client and/or the service with the service ID and in step 395 GP2 directly addresses the client or the communication is routed via GP1 to GP2 and to the client. However, other alternatives can be performed as well as soon as the receiver of the data message, i.e. a certain local migration anchor point, has identified the actual global migration anchor point to which a certain virtual machine addressed by a service identification is connected in the hierarchical network.

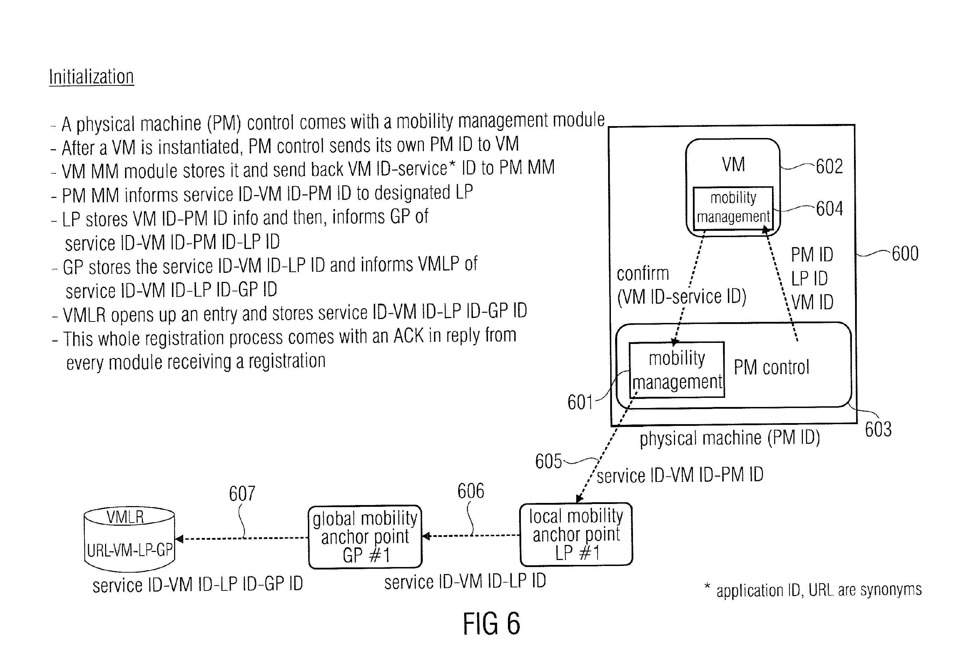

Subsequently, Fig. 6 is discussed in more detail in order to illustrate a detailed embodiment for an initialization procedure.

A physical machine illustrated at 600 comprises a migration management module 601. After a virtual machine is instantiated by defining the ID of the virtual machine, the IP address, a memory and a certain hardware resource such as, for example, core 1 or so, the virtual machine 602 exists in the physical machine. Then, the physical machine controller 603 sends its own physical machine ID, this physical machine ID is indicated as PM ID. Then, the migration management module 604 of the virtual machine stores the PM ID and sends back its own VM-ID or "service ID" back to the physical machine migration management 601. It is to be noted that the service ID is the same as an application ID or a URL as known in the field. The migration management functionality of the physical machine then transmits the service ID of the virtual machine and the physical machine ID of the physical machine to the designated migration anchor point as indicated at 605. Then, the local migration anchor point stores the virtual machine ID, the physical machine ID and then informs the global migration anchor point of the service ID, the virtual machine ID, the physical machine ID and the local migration anchor point ID as indicated in step 606. Then, the global migration anchor point stores service ID, the virtual machine ID and the local migration anchor point ID and informs the VMLR of the service ID, the virtual machine ID, the local migration anchor point ID and the global migration anchor point ID as indicated at 607. The VMLR then opens up an entry and stores, in association to each other, the service ID, the virtual machine ID, the local migration anchor point ID and the global migration anchor point ID. Furthermore, it is preferred that the whole registration process is performed with an ACK (acknowledgement) message and reply from every module receiving a registration, i.e. the LP sends a reply back to the physical machine, the GP sends a reply back to the LP and the VMLR sends a reply back to the GP.

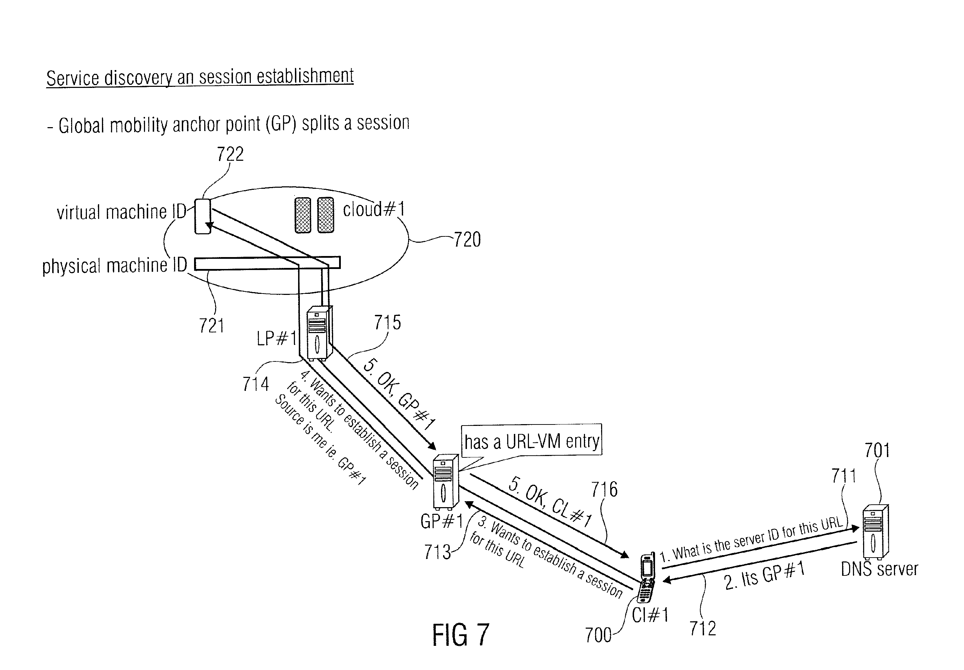

Subsequently, the service discovery and session establishment is discussed in the context of Fig. 7.

First of all, the client illustrated at 700 in Fig. 7 sends a message to the so-called DNS server. Specifically, the client wants to access a certain service and this certain service is running on a virtual machine which the client, naturally, does not know. However, the client knows a web address and the client therefore accesses the DNS server 701 with the first message 711 in order to find information on the server ID for this URL. Then, the DNS server 702 replies with a second message indicating the ID of the global migration anchor point, to which the virtual machine is associated. This information can be provided by the DNS server, since the DNS server is updated with respect to the association of global migration anchor points on the one hand and service IDs or URL's on the other hand, as illustrated in step 712. Then, in a third step, the client 700 accesses the GP indicated in message 712 requesting that the client wishes to establish a session for this URL as illustrated in 713.

The GP1 then addresses the associated LP1 by telling the LP1 that the GP1 (rather than the client 700 itself) wants to establish a session for the URL and GP1 indicates that the session is for GP1 rather than the client as indicated at 714. This information is routed via the corresponding LP such as LP1 to the first cloud 720 and the LP1 is aware of the physical machine ID 721, which the virtual machine ID indicated in the message 714 belongs to. The virtual machine ID is indicated at 722. Then, the physical machine and particularly the migration management of the physical machine and the migration management of the virtual machine or only of the migration management elements discussed in Fig. 6 replies via message 715 saying that the session establishment is ok and that the session holder is GP1. Then, as illustrated by 716 GP1 reports back to the client that the session is ok and that the session is for the client. However, the client does not notice that the specific session holder, however, is GP 1 rather than the client itself.

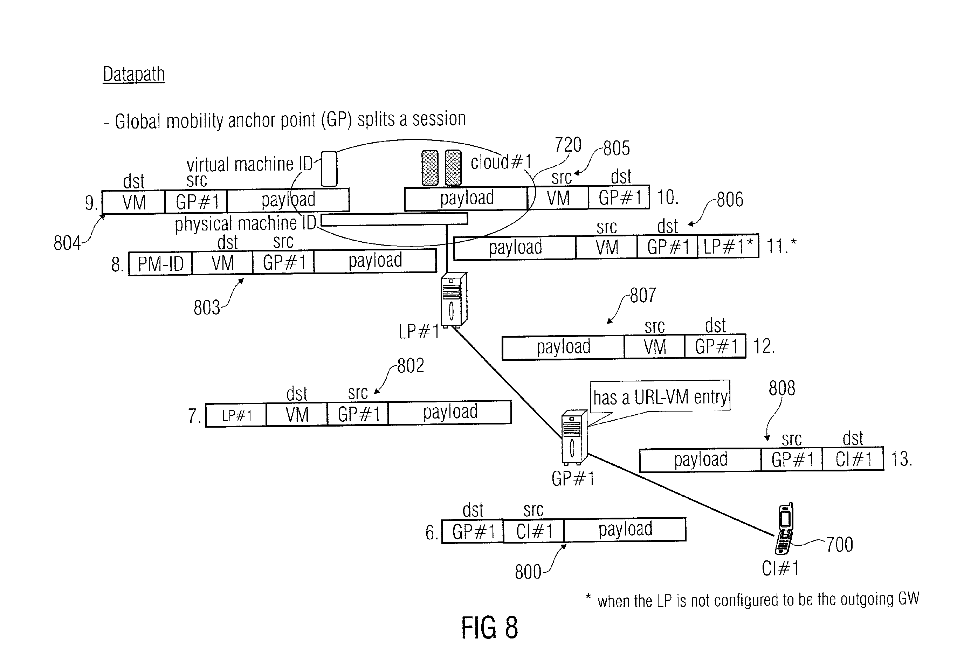

Subsequently, the data path is discussed with respect to Fig. 8. After the session has been established by the procedure of Fig. 7, the client 700 now starts to communicate payload. This is done by message 800 having a destination section indicating GP1 as the destination of the message sent by the client, having a source section indicating the client as the source and having a payload section. Then, GP1 sends a message 802 up to the local migration anchor point associated with a specific service ID. To this end, the source field is changed from client1 to GP1, and the destination field is changed to the virtual machine on the one hand and the local migration anchor point ID on the other hand as indicated at message 802. Then, the local migration anchor point sends a message 803 to the specific physical machine. Again, the source field is unchanged and remains GP1, the destination field, however, is changed to indicate the physical machine ID and the virtual machine rather than the local migration anchor point ID and the virtual machine as in message 802. Then, the physical machine having the indicated physical machine ID sends message 804 to the virtual machine indicated by the destination field, and the virtual machine then processes the message and sends the result back in a message 805. Then, this message has the destination GP1 and the source of the virtual machine actually generating this message within cloud 1 720. Then, the migration management manager associated with the physical machine hosting the virtual machine receives the message 805 from the migration manager associated with the virtual machine. The physical machine then sends message 806 up to the local migration anchor point where the source field remains at VM, the destination field remains at GP1 and the destination is additionally indicated to be LP1. This, however, is only necessary when LP is not configured to be the outgoing gateway from a cloud. However, then the LP1 is automatically configured to be the outgoing gateway for all physical machines in cloud 720, then LP1 of message 806 is not required, and messages 805 and 806 are identical.

Then, the LP1 sends message 807 up to GP1 where the source and destination fields are left unchanged apart from the stripping off of the LP1 identification. Then, GP1 which actually has an URL-VM entry sends up the file message 808 to the client 700 and the client actually feels that the client's service has been served by GP1. Hence, Fig. 8 illustrates the significant advantage of the hierarchical system of the present invention, i.e., that the client does not have to care about anything down in the hierarchical system but only has to take care of a global migration anchor point to which a message is to be sent.

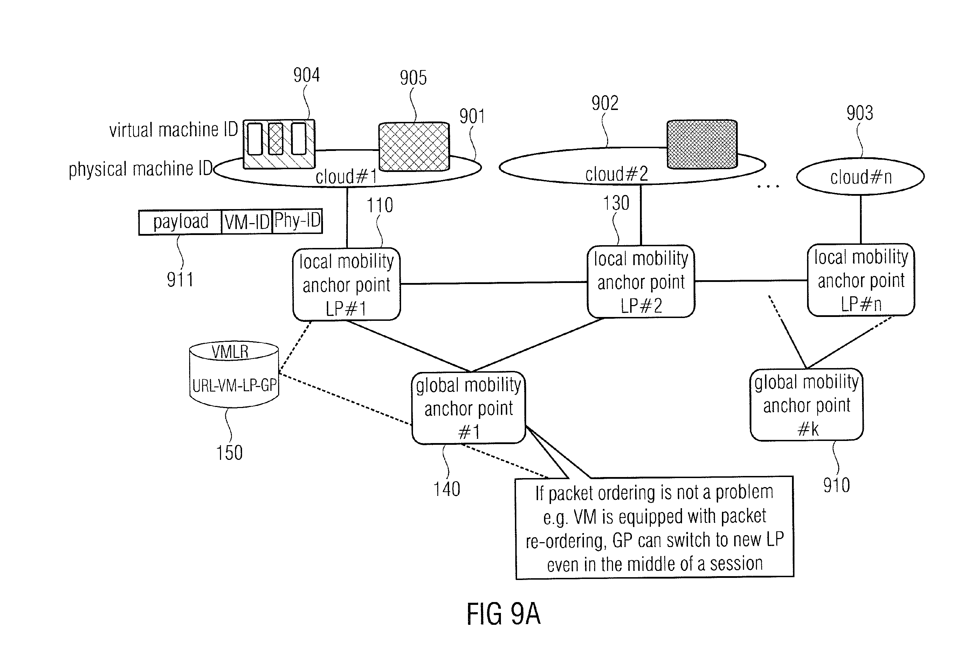

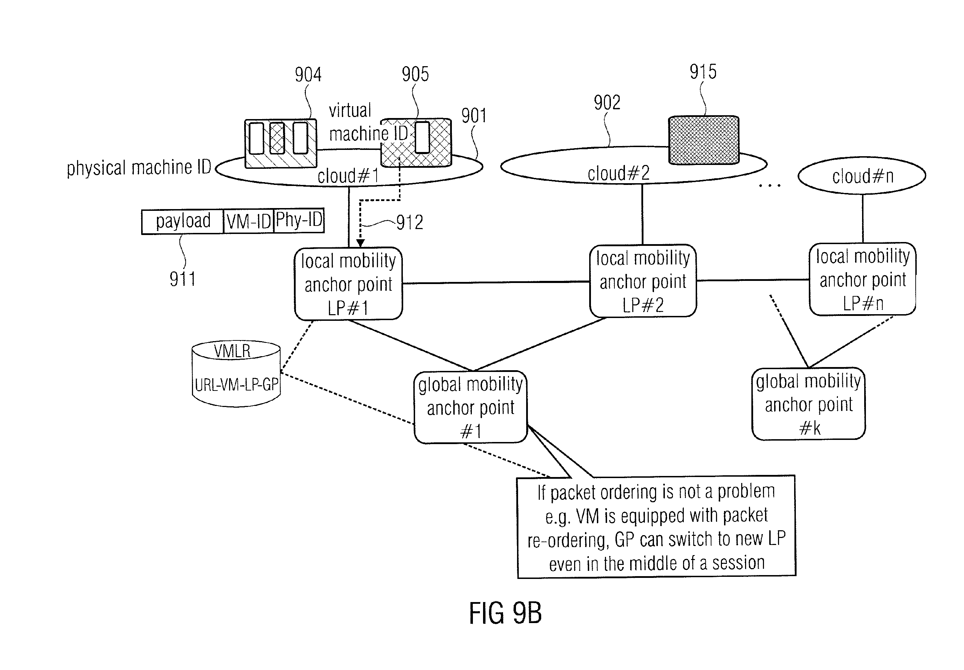

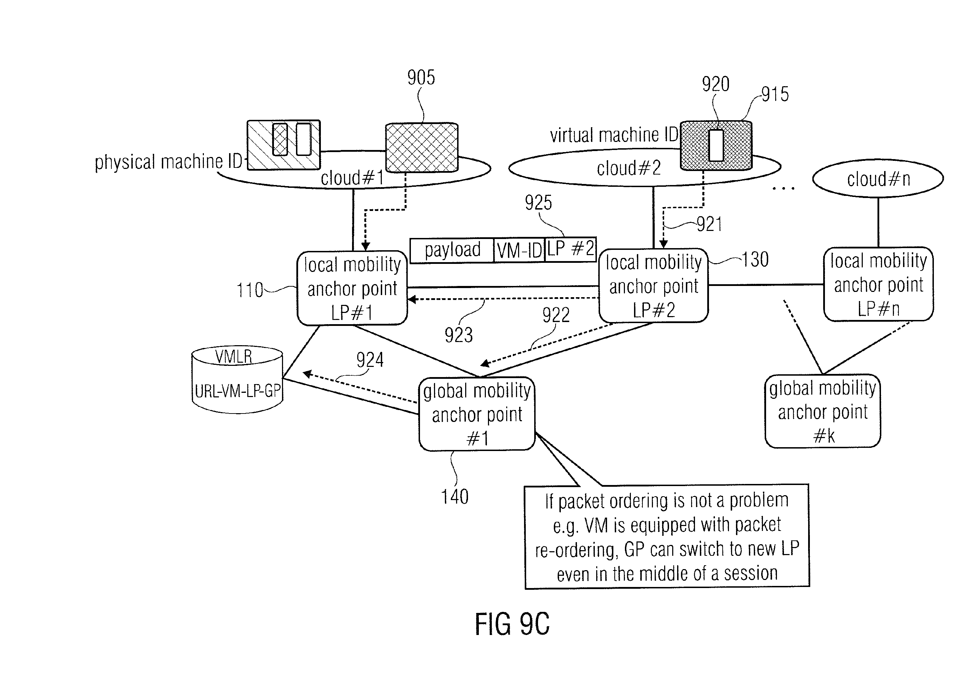

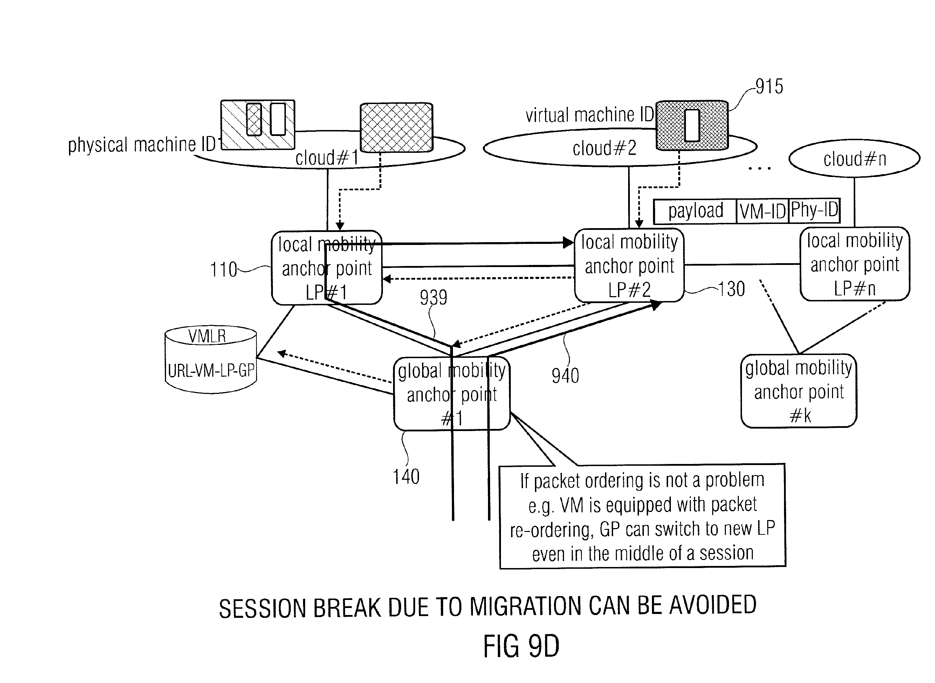

Subsequently, Fig. 9a is discussed in order to illustrate a migration support/handover. Three clouds 901, 902, 903 are illustrated, where a physical machine 904 and a different physical machine 905 are illustrated. Furthermore, the VMLR 150, LP1 110, LP2 130 and a further local migration anchor point number n are illustrated and, additionally, two global migration anchor points 140 and a further global migration anchor point 910 are illustrated. The message 911 has a payload section and a destination section having the VM ID and the physical machine ID of the physical machine 904. Now, as illustrated in Fig. 9b, the virtual machine is to be migrated from physical machine 904 to physical machine 905, i.e., within a cloud. This is communicated from the physical machine to the local migration anchor point via a message 912 and the local migration anchor point LP1 then changes the physical ID entry in the message 911 from the physical ID of machine 904 to the physical ID of machine 905. When, however, the virtual machine is moved from physical machine 905 from cloud 901 to physical machine 915 of the second cloud, additional procedures are necessary, which are subsequently discussed in the context of Fig. 9c. In a first step, the virtual machine having the virtual machine ID is moved from physical machine 905 to physical machine 915 as illustrated at 920. The next step is that physical machine 915 notifies this new situation to its associated local migration anchor point 130. This is done via message 921. Then, local migration anchor point 130 notifies its associate global migration anchor point on this new situation via message 922. Additionally, the new situation can be notified from LP2 130 to LP1 110 via message 923 or can be notified from GP1 140 to the VM LR via message 924. Then, the local migration anchor point 110, which was still in possession of message 911 of Fig. 9b, has to process this message. To this end, the destination field earlier indicating physical machine 905 now indicates local migration anchor point 130 as illustrated at 925 in Fig. 9c. Then, this message can actually arrive local migration anchor point 130. Then, as illustrated in Fig. 9d, LP2 130 replaces the physical ID of itself, i.e., of local migration anchor point by the physical machine ID of physical machine 915. Then, as indicated in Fig. 9d, a message receiving global migration anchor point is routed to local migration anchor point 110 and from this place routed to local migration anchor point 130 in order to finally arrive at the virtual machine now residing in block 915. However, if packet ordering is not a problem, i.e., if the virtual machine is equipped with a packet re-ordering functionality, then the global migration anchor point 140 can take the direct route illustrated at 940 instead of the indirect route via LP1 illustrated at 93 9.

Hence, this procedure avoids a session break due to migration, since the re-routing takes place smoothly without any procedures which would be experienced by the client. Furthermore, since all re-routing procedures take place with available information, the LP1 110, 113 or the GP can easily forward messages by corresponding manipulations to the source or destination fields as discussed before. Compared to a centralized solution, where only a central controller exists, the routes 939, 940 are significantly shorter.

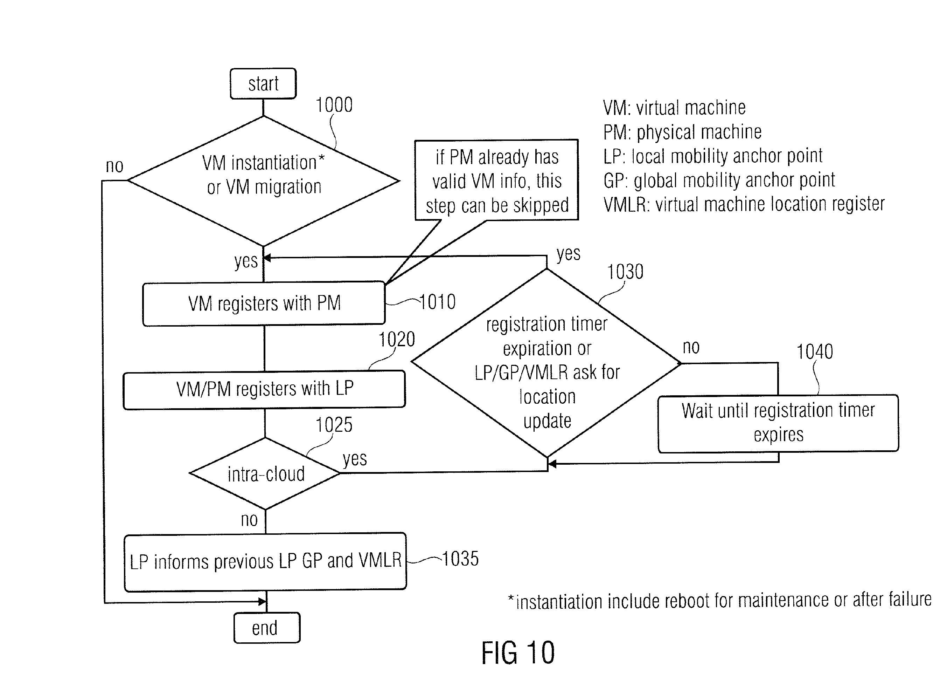

Subsequently, Fig. 10 is discussed in order to illustrate a certain flowchart on the cooperation of the individual entities. In block 1000 it is determined whether VM instantiation or VM migration has taken place. When it is determined that anything like that has not taken place, the procedure ends. However, when it is determined that an instantiation or migration is on topic, then step 1010 is performed, in which a virtual machine registers itself with a physical machine. If the physical machine already has a valid virtual machine info, then this step can be skipped. In step 1020 the virtual machine and the corresponding physical machine register with their corresponding local migration anchor point. If this has been an intra-cloud process, then the procedure illustrated in block 1030 is performed. However, when it is determined in block 1025 that an inter-cloud procedure is on topic, then the local migration anchor point which currently has the virtual machine informs the previous local migration anchor point, the global migration anchor point and the VMLR on the inter-cloud migration as illustrated in block 1035. However, when block 1025 determines an intra-cloud migration, then block 1030 is performed. Block 1030 indicates a registration timer expiration or an intentional update request issued by the LP, GP, or VMLR. This timer is located at the local migration anchor points as indicated in block 110c, 130c and when the timer has expired a location update is performed by either the LP or the GP or the VMLR or all individual entities. When, however, the timer has not expired, then block 1040 indicates that nothing happens until the registration timer expires. Therefore, the procedure illustrated in block 1010 and the following blocks is performed in response to individual triggers. One trigger is the registration timer expiration and another trigger is a location update request from any LP, any GP or the VMLR.

Subsequently, the specific preferred paging functionality is discussed. If a valid entry in VMLR, GP, LP is not available for any reason, where one reason could also be a data corruption or a data transmission error or something similar, a VMLR, a GP and/or an LP can ask all LPs (or some LPs where the virtual machine was last residing in the recent past) to do paging. This can also be done through GPs, and additionally VMLR can do paging alone or ask a GP to do paging and the GP then asks the LPs under its coverage to do paging.

Then, the LPs broadcast a location registration/update request to all physical machines (PM) in their respective clouds. Then, the physical machine which hosts the VM in questions (or the VM itself) replies to the LP and particularly to the location registration/update request and then the LP knows which physical machine host the virtual machine. The LP then informs the VMLR and may also inform the GP or more global migration anchor points. To this end, the LP then forwards its own LP ID to the VMLR and the VMLR can then update the corresponding data entry for the service ID so that the new session request from a client can be actually forwarded via the correct GP to the correct LP and from there to the correct physical machine.

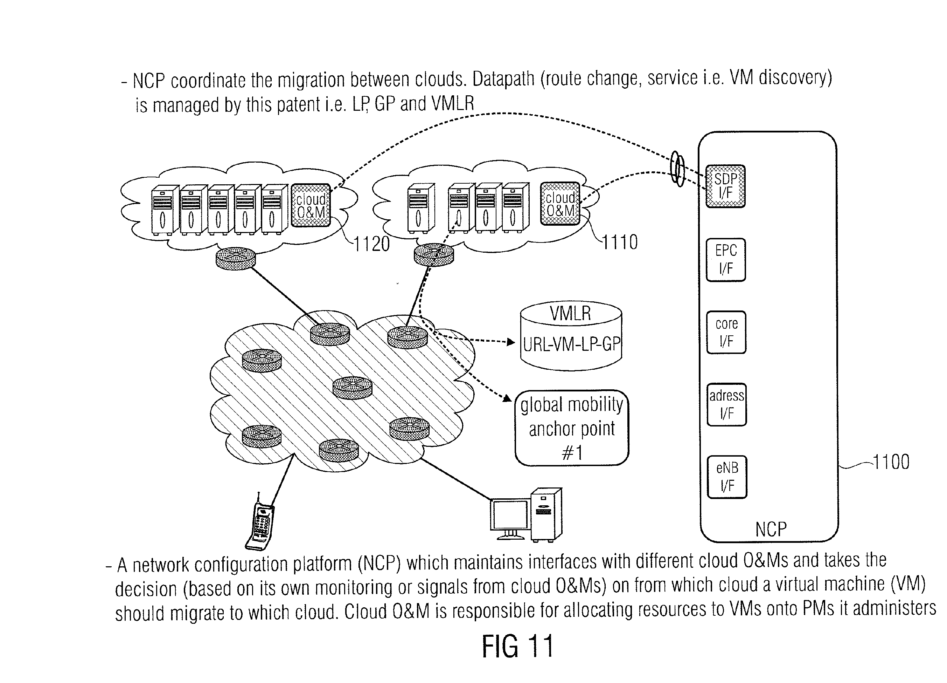

Fig. 11 illustrates further procedures in order to find a decision on migration. A network configuration platform NCP illustrated at 1100 maintains interfaces with different clouds, particularly with different cloud controllers 1110 and 1120. The network configuration platform NCP maintains these interfaces with these different cloud controllers (cloud O&Ms) and takes a decision preferably based on its own monitoring or based on signals from the cloud controllers 1120, 1110. This decision indicates from which cloud the virtual machine should migrate to which cloud. The cloud controllers 1120, 1110 are responsible for allocating resources to virtual machines on the physical machines under the control of the cloud controllers, which are also indicated as group managers 101, 121 in Fig. 1. Particularly, the VMLR stores the service ID or "URL", the associated virtual machine ID, LP ID and GP ID.

The route change, the service providing and the virtual machine discovery is performed in connection with the GPs and this has been discussed before.

The present invention is advantageous for the following reasons. The inventive hierarchical system is scalable, since only a few anchor points such as LPs and GPs are necessary. This reduces complexity from the signaling point of view, for example. Furthermore, the inventive procedure is cellular network friendly and experiences from the operation of a cellular network, where cellular networks are extensively operated in the world, can be used for cloud computing as well. Preferred embodiments of the present invention relate to a system comprising a cloud or a group of at least two physical machines, where a plurality of physical computing machines (PM) hosts a plurality of virtual machines. Furthermore, the system comprises one or more local migration anchor points (LP) and one or more global migration anchor points GP and a virtual machine location registrar where each of these entities hold unique IDs to be identified and holds a pointer to the location of the virtual machine.

One feature of the present invention is a location registration step to be performed at the VM, the PM, the LP and/or the GP through which the VM, the PM, the LP, the GP and/or the VMLR receive knowledge where a previously mentioned VM is located in the network, i.e. in which PM it is in and what kind of services it provides which is identified by the service-ID or URL.

The present invention furthermore relates to a database system which holds the mapping of an application program access ID such as a service ID/URL, its hosting virtual machine, in which physical machine the virtual machine is located in, the physical machine/LP association and the LP/GP association, where these entities, i.e. the physical machine, the local migration anchor point and the global migration anchor point, are identified by their IDs.

In a further aspect of the present invention the local migration anchor point supports the migration of a virtual machine when inside the same cloud and holds information on which virtual machine is located in which physical machine. Particularly, the local migration anchor point changes the physical machine ID when the virtual machine moves to a new physical machine. Hence, the local migration anchor point is configured for routing data destined to a virtual machine to the appropriate physical machine where the virtual machine is located in, and this is preferably performed by means of adding an appropriate physical machine ID in front of the data header.

The local migration anchor point is responsible for forwarding data destined to a virtual machine to its new local migration anchor point after migration which was located into the cloud the local migration anchor point is responsible for by appending, for example, the new LP-ID in the data header.

The local migration anchor point furthermore informs the VMLR and the GP if a VM migrates from one cloud to another cloud and additionally the previous LP is informed as well.

The local migration anchor point can, upon request from the VMLR or the GP or by itself, issue a broadcast paging message to all physical machines in its cloud to initiate a virtual machine location update for all virtual machines or for one or several virtual machines by explicitly mentioning the particular virtual machine IDs in the paging message.

The global migration anchor point (GP) supports the migration of a virtual machine between/among clouds and holds information on how a virtual machine can be reached through which local migration anchor point. The GP additionally works as a resolver for resolving the relation between an application ID and the host of the application machine, such as the VM and the GP returns its own ID to a querying client as the ID of the application a client is searching for. It holds the App-ID-VM-LP-GP info or at least a part of it.

A GP preferably sets up/opens a session with the virtual machine, where the application is located into on behalf of the client and pretends to be the source itself, which has also been discussed in the context of session splitting.

A GP preferably forwards data from a client by replacing the client ID as source with its own ID. Then it appends the appropriate LP ID in front of the data header.

The GP can change the route of an ongoing session to the new location of the virtual machine by appending the ID of the new LP instead of the previous one, when the GP receives a location update for a virtual machine from a local migration anchor point.

The GP is additionally configured for replacing the source ID of the virtual machine, upon receiving data from a virtual machine destined to a client, and the GP does this by itself and pretends that it is the source of the data. It also replaces the destination of the data from itself to the client ID.

The virtual machine location registrar or register holds information on which application ID is located in which virtual machine covered by which local migration anchor point covered by which global migration anchor point (URL-VM-LP-GP) or at least a part of this information. The application ID refers to identifiers to application services such as web applications, videos, etc. A URL is, for example, one example of an application ID.

It is to be noted that a location of the LP, the GP and the VMLR is arbitrary with respect to each other. The entities can be physically or functionally deployed at the same place, can be functionally deployed together or can remain separate with respect to their physical location or functional location.

In an embodiment, the GP can be merged with an LP. In this case, the GP's functionality is performed by the LP. Nevertheless, the merge device has the GP functionality, i.e. the data records and the LP functionality, i.e. the data sets.

If a session is not split, i.e. no encapsulation is performed an the client sends data all the way with the virtual machine-ID as destination, the old LP forwards data to the new LP after migration. In such cases, the LP works as the ingress/egress gateway to a cloud.

The present invention therefore additionally relates to a plurality of server firms, where each server firm has a plurality of physical server machines. Each physical server machines holds the plurality of virtual server machines, where each server firm is connected to a local migration anchor point, where a plurality of local migration anchor points are connected to a global migration anchor point. The local migration anchor points and the global migration anchor points are connected to a virtual server machine location registrar which holds the information on which application is located in which virtual machine, and which virtual machine is covered by which LP and which LP is covered by which GP. Particularly, the VM, the PM, the LP and the GP are equipped with migration management functionalities and the location of the virtual machine is traceable through the GP-LP-PM chain.

In a further embodiment, the network configuration platform is provided, which maintains interfaces with different cloud controllers or group managers (such as 101 and 121 of Fig. 1). This network configuration platform or inter-cloud migration management module such as 1100 of Fig. 11 takes the decision based on its own monitoring or based on signals from the group managers, how a migration should be done and/or which virtual machine should migrate from which cloud to which other cloud. The group manager for each cloud or "cloud O&M" is responsible for allocating resources to virtual machines onto the physical machines which are administered by the corresponding group manager.

Subsequently, the location registration/update process is discussed in more detail. A virtual machine having its original ID registers itself to the physical machine PM it is presently in.

Either the virtual machine sends a location registration message to the local migration anchor point. In this case, it receives the ID of the physical machine and the ID of the LP from the physical machine it is into. Alternatively, the PM does the location registration on behalf of the virtual machine. In that case, the physical machine sends its own ID and the VM ID to the LP so that the LP knows that the this VM is residing into this specific PM. The LP maintains a mapping of the virtual machine to the physical machine in its database/in its plurality of data sets. The validity of this entry is subject to expiration after a predefined period preferably defined by the corresponding timer in the LP. The location registration process has to be redone by the virtual machine or physical machine within this period.

If the PM does not receive a location update message for a virtual machine/physical machine entry, it is configured for issuing a location update request to the virtual machine/physical machine.

If a positive reply is received, the VM-PM entry validity is extended to a predefined period.

The PM can also send a negative reply, i.e. that the VM is not in it anymore or can ignore such a message. If the LP gets a negative reply or not reply to its location update request, it deletes this particular entry from the plurality of data sets. The LP can also inform the VMLR that the entry for the VM-LP entry for this particular VM is not valid anymore. The location registration is done when a virtual machine is instantiated or moved to a different PM.

An LP can also ask all PMs within its coverage to do the location registration/update at any time, for example if the LP has to reboot itself and loses all the VM-PM mappings. In such cases, a PM can do location registration/update by a single message which includes the PM ID and all the VM IDs in one message.

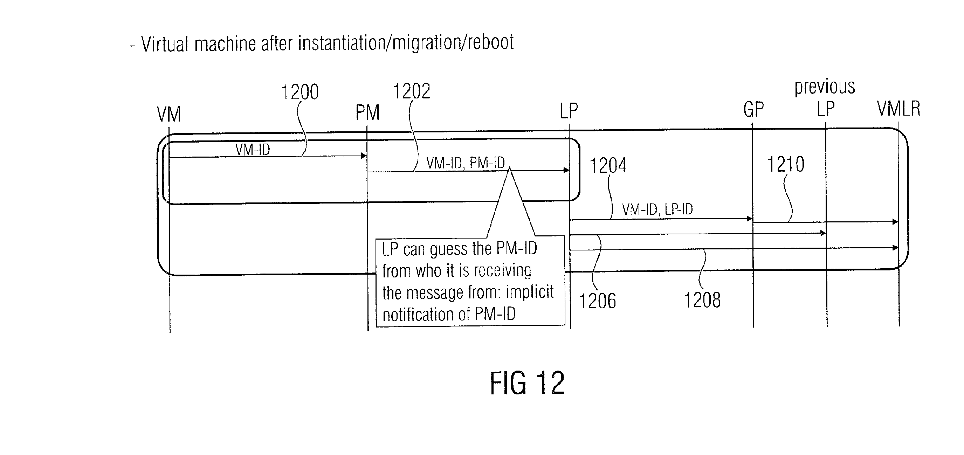

Subsequently, Fig. 12 is illustrated indicating the procedures done by a virtual machine after instantiation/migration/reboot.

First of all, the VM sends its VM-ID to the PM, in which the VM is located as indicated at 1200 in Fig. 12. Then, the PM sends the VM-ID its own PM-ID within a message to the connected LP as indicated at 1202. Particularly, the LP can guess the PM-ID from who it is receiving the message and this would then be an implicit notification of the PM-ID and in this case the PM-ID is not required in message 1202.

The LP then sends the VM-ID and the LP-ID to the connected GP in message 1204, sends this information to the previous LP as indicated at 1206 and sends this information to the VMLR by message 1208. Alternatively or additionally, the GP sends this information to the VMLR as indicated at 1210, i.e. as an alternative to message 1208 or in addition to message 1208.

Subsequently, a further description with respect to a session setup is provided in order to show a preferred embodiment of the present invention.

A client at first checks its DNS server for a URL/VM-ID translation. A scenario is for example that the GP works as a URL-VM-ID translator which is an analogy to the DNS procedure. Therefore, all clients ask the GP for a URL-to-routable-ID-translation. In this case, all clients are preprogrammed to ask a GP for a URL-routable ID resolution.

Other URL-VM-ID translators can redirect a URL-VM-ID resolution request to a GP which is comparable to a DNS redirection.

The GP checks its own internal database for a valid (not expired) VM-ID-LP-ID mapping. If the GP does not find one, then the GP asks the VMLR for an appropriate URL - GP-ID - LP-ID - VM-ID mapping. According to the response from the VMLR, the GP sends back its own ID as the destination ID against the URL a client is requesting for (and stores the URL-GP-LP-VM mapping in its database), if the GP finds that the LP is under its own coverage and if it wishes to serve (for load or operators policy reason).

If the VM is attached to an LP which is not under this GP's coverage, the GP redirects the resolution request from the client the GP working as the virtual machine's global migration anchor point, where this information was included in the response from the VMLR.

The GP needs to establish a session with the virtual machine also before a data session starts. After the client, has got a destination routable ID (such as a GP-ID) it starts the session establishment procedure prior to the data transmission. In the session establishment messages, the GP replaces the source ID (i.e. client-ID) with its own ID and replaces the destination ID (i.e. its own ID) with the VM-ID. Then it appends the ID of the responsible LP and forwards the thus manipulated message.

Therefore, data packets destined to a VM reach the GP at first. The GP replaces its own ID with the destination VM-ID, which only the GP knows as the source client sees the GP as the destination, not VM where the actual application is located, and forwards same. Therefore, the GP maintains a table to do the mapping of client-GP - GP-VM sessions which is in analogy to the NAT feature.

The GP, before forwarding the data to the VM, encapsulates this data with the LP-ID, so that on the way to the VM the data reaches the LP. The LP, upon receiving the data, strips off the outer ID, i.e. its own ID. It finds out the VM-ID as the next ID. It checks its database to find out the VM-ID - PM-ID mapping. It then encapsulates the data with the PM-ID as the destination.

Therefore, the PM receives the data and the PM then strips off the outer ID (its own ID) and therefore the VM-ID becomes visible and therefore the data is delivered to the appropriate VM identified by the now visible VM-ID.

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Depending on certain implementation requirements, embodiments of the invention can be implemented in hardware or in software. The implementation can be performed using a digital storage medium, for example a floppy disk, a DVD, a CD, a ROM, a PROM, an EPROM, an EEPROM or a FLASH memory, having electronically readable control signals stored thereon, which cooperate (or are capable of cooperating) with a programmable computer system such that the respective method is performed.

Some embodiments according to the invention comprise a non-transitory data carrier having electronically readable control signals, which are capable of cooperating with a programmable computer system, such that one of the methods described herein is performed or having stored thereon the first or second acquisition signals or first or second mixed signals.

Generally, embodiments of the present invention can be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier.

In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein.

A further embodiment of the inventive method is, therefore, a data stream or a sequence of signals representing the computer program for performing one of the methods described herein. The data stream or the sequence of signals may for example be configured to be transferred via a data communication connection, for example via the Internet.

A further embodiment comprises a processing means, for example a computer, or a programmable logic device, configured to or adapted to perform one of the methods described herein.

A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein will be apparent to others skilled in the art. It is the intent, therefore, to be limited only by the scope of the impending patent claims and not by the specific details presented by way of description and explanation of the embodiments herein.

## Claims

1. Hierarchical system for managing a plurality of virtual machines, comprising:
a first local migration anchor point (110) connectable to a first group of at least two physical machines (100a, 100b), wherein the first migration anchor point is configured for storing a data set (110a, 110b) comprising a virtual machine identification of a first virtual machine located on one of the first group of at least two physical machines, and a physical machine identification of the one physical machine;
a second local migration anchor point (130) connectable to a second group of at least two physical machines (120a, 120b), wherein the second local migration anchor point is configured for storing a data set (130a, 130b) comprising a virtual machine identification of a second virtual machine located on one physical machine of the second group of at least two physical machines, and a physical machine identification of the one physical machine;
a global migration anchor point (140) connected to the first local migration anchor point and the second local migration anchor point, wherein the global migration anchor point is configured for storing, in a first data record (140a), a first service identification on an application performed by the first virtual machine, an associated identification of the first virtual machine, and an identification of the first local migration anchor point, and for storing, in a second data record (140b), a service identification of an application performed by the second virtual machine, an associated identification of the second virtual machine, and an identification of the second local migration anchor point;
a virtual machine location register (150) configured for storing a first data entry (150a) for the first virtual machine, the first data entry comprising the first service identification, the identification of the first virtual machine and the identification of the first local migration anchor point, and comprising a second data entry (150b) comprising the second service identification, the identification of the second virtual machine and the identification of the second local migration anchor point to which the physical machine, in which the second virtual machine is located, is connectable;
a central network management system (160); and
a group manager (101, 121) for each group of physical machines,
wherein the central network management system (160) is configured to receive (315) or make a decision to migrate the first virtual machine from the first group of physical machines to the first physical machine of the second group of physical machines,
wherein the second local migration anchor point is configured to receive (320), from the first physical machine of the second group of physical machines, an information that the first virtual machine is located in the first physical machine of the second group of physical machines,
wherein the second local migration anchor point is configured to send (325) a message to the global migration anchor point that the first virtual machine is located in the second group of physical machines, wherein the global migration anchor point is configured to access (330) the virtual machine location register for receiving an information on the previous local migration anchor point, or wherein the second local migration anchor point is configured to send (335) a message to the virtual machine location register to obtain information on the previous local migration anchor point, and
wherein the first local migration anchor point is configured for sending (340) a data message to be directed to the first virtual machine to the second local migration anchor point by indicating the second local migration anchor point in a destination entry of the data message.

2. Hierarchical system of claim 1, further comprising a second global migration anchor point connected to a third local migration anchor point and a fourth local migration anchor point,
wherein the virtual machine location register (150) is configured to store, in each data entry, in addition a global migration anchor point identification of the global migration anchor point, to which the local migration anchor point identified in the data entry is connected.

3. Hierarchical system of claim 1 or 2,
wherein the global migration anchor point is configured for receiving (200) a data message from a client for a service identified by the service identification, wherein the data message has a source entry identifying the client and a destination entry identifying the global migration anchor point, and
wherein the global migration anchor point is configured for manipulating (205) the data message so that the source entry identifies the global migration anchor point and the destination entry identifies the local migration anchor point and the virtual machine based on the stored data record comprising the service identification.

4. Hierarchical system of one of the preceding claims,
wherein the local migration anchor point is configured for receiving (210) a data message from the global migration anchor point, wherein the local migration anchor point is configured for replacing (215), in the data message, the local migration anchor point identification by the physical machine identification based on a stored data set comprising the virtual machine identification indicated by the data message.

5. Hierarchical system of one of the preceding claims,
wherein the local migration anchor point is configured for receiving a data message (806) comprising a virtual machine identification as a source and a global migration anchor point as a destination, and for forwarding the data message (807) to the global migration anchor point identified in the data entry comprising the identification of the virtual machine.

6. Hierarchical system of one of the preceding claims,
wherein the global migration anchor point is configured for receiving a data message (807) from a local migration anchor point, the data message having a virtual machine identification as a source and the global migration anchor point as a destination,
wherein the global migration anchor point is configured for manipulating the data message to replace the global migration anchor point as the destination by a client identification based on the data record comprising the identification of the virtual machine, and for replacing the virtual machine as the source by the global migration anchor point identification of the global migration anchor point.

7. Hierarchical system of claim 1, wherein the central network management system (1100) is configured for receiving (300) a request to migrate the first virtual machine from the first physical machine of the first group to the second physical machine of the first group,
wherein the first local migration anchor point is configured to receive (305), from the group manager (1020, 1110), in response to the decision, an information on the identification of the second physical machine, and
wherein the local migration anchor point replaces (310), in the data set, the identification of the first physical machine by the identification of the second physical machine.

8. Hierarchical system of one of the preceding claims,
wherein at least one of the first local migration anchor points and the second local migration anchor point, the global migration anchor point and the virtual machine location register are configured for performing a paging functionality in case of a non-valid data in the virtual machine location register, the first and second local migration anchor points or the global migration anchor point.

9. Hierarchical system of claim 8,
wherein at least one of the virtual machine location register, the global migration anchor point or the first and the second local migration anchor points are configured for asking all local migration anchor points, in which a virtual machine was registered in the past only, or
wherein the virtual machine location register is configured for asking the global migration anchor point to perform paging and the global migration anchor point is configured for asking the local migration anchor points connected to the global migration anchor point to perform paging.

10. Hierarchical system of one of the preceding claims,
wherein the local migration anchor point is configured for sending (350) a location registration/update request identifying a certain virtual machine to all physical machines in the connectable group of physical machines,
wherein the local migration anchor point is configured to receive (355) a reply from the physical machine having the certain virtual machine located, and
wherein the local migration anchor point is configured to inform (360) the virtual machine location register or, additionally, the global migration anchor point on the physical machine, on which the certain virtual machine resides.

11. Hierarchical system of one of the preceding claims, further comprising:
the first group of physical machines, where each physical machine comprises a migration management control functionality and a virtual machine functionality,
wherein the migration management control functionality is configured for communicating with the first local migration anchor point.

12. Hierarchical system of one of the preceding claims,
wherein the first and the second local migration anchor points each have a timer (110c, 130c) indicating an expiration time period,
wherein the physical machines or the virtual machines are configured to send a location registration message within the expiration time period to the local migration anchor point so that the corresponding data set is extended by a further time period, or
if the location registration message is not received within the expiration time period, the first and the second local migration anchor points are configured to delete the corresponding data set identifying a certain virtual machine.

13. Hierarchical system of one of the preceding claims,
wherein the global migration anchor point is configured to translate a service identification received from a client in an IP address for a virtual machine.

14. Hierarchical system of one of the preceding claims,
wherein the hierarchical system comprises at least two global migration anchor points,
wherein a first global migration anchor point is configured to receive (370) a client request having a service identification,
wherein the first global migration anchor point is configured to check (375) the data records for the service identification,
wherein, when the service identification is not found in the data records stored by the first global migration anchor point, the first global migration anchor point is configured to request (380) an identification of the global migration anchor point associated with the service identification from the virtual machine location register,
wherein the global migration anchor point is configured to receive (385) an identification of the second global migration anchor point having the service identification in the data records,
wherein the first global migration anchor point is configured to inform (390) the second global migration anchor point identified by the virtual machine location register on the client requiring the service identified by the service identification.

15. Method of managing a plurality of virtual machines, comprising:
connecting a first local migration anchor point (110) to a first group of at least two physical machines, wherein the first migration anchor point is configured for storing a data set comprising a virtual machine identification of the first virtual machine located on one of the first group of at least two physical machines, and a physical machine identification of the one physical machine;
connecting a second local migration anchor point (130) to a second group of at least two physical machines, wherein the second local migration anchor point is configured for storing a data set comprising a virtual machine identification of a second virtual machine located on one physical machine of the second group of at least two physical machines, and a physical machine identification of the one physical machine;
connecting a global migration anchor point (140) to the first local migration anchor point and the second local migration anchor point, wherein the global migration anchor point is configured for storing, in a first data record, a first service identification on an application performed by the first virtual machine, an associated identification of the first virtual machine, and an identification of the first local migration anchor point, and for storing, in a second data record, a service identification of an application performed by the second virtual machine, an associated identification of the second virtual machine, and an identification of the second local migration anchor point;
storing, in a virtual machine location register (150), a first data entry for the first virtual machine, the first data entry comprising the first service identification, the identification of the first virtual machine and the identification of the first local migration anchor point, and comprising a second data entry comprising the second service identification, the identification of the second virtual machine and the identification of the second local migration anchor point to which the physical machine, in which the second virtual machine is located, is connectable;
receiving (315) or making, by a central network management system (160), a decision to migrate the first virtual machine from the first group of physical machines to the first physical machine of the second group of physical machines,
receiving (320), by the second local migration anchor point, from the first physical machine of the second group of physical machines, an information that the first virtual machine is located in the first physical machine of the second group of physical machines,
sending (325), by the second local migration anchor point, a message to the global migration anchor point that the first virtual machine is located in the second group of physical machines, accessing (330), by the global migration anchor point, the virtual machine location register for receiving an information on the previous local migration anchor point, or sending (335), by the second local migration anchor point, a message to the virtual machine location register to obtain information on the previous local migration anchor point, and
sending (340), by the first local migration anchor point, a data message to be directed to the first virtual machine to the second local migration anchor point by
indicating the second local migration anchor point in a destination entry of the data message.

16. Computer program comprising a program code for performing, when running on a computer, the method of managing a plurality of virtual machines in accordance with claim 15.
